# EUROPÄISCHE PATENTSCHRIFT

(11) **EP 3 924 132 B1**
(45) Veröffentlichungstag und Bekanntmachung des Hinweises auf die Patenterteilung: **09.08.2023**
(21) Anmeldenummer: 20703969.4
(22) Anmeldetag: 04.02.2020
(51) Int. Cl.: B23K 9/12, B23K 9/133

(54) **DRAHTVORSCHUBEINRICHTUNG UND VERFAHREN ZUM ERZEUGEN EINES DRAHTVORSCHUBS**
WIRE-FEED DEVICE AND METHOD FOR FEEDING WIRE
DISPOSITIF D'AVANCE DE FIL MÉTALLIQUE ET PROCÉDÉ POUR INDUIRE UNE AVANCE DE FIL MÉTALLIQUE

(30) Priorität: 14.02.2019 DE 102019103740
(43) Veröffentlichungstag der Anmeldung: 22.12.2021
(73) Patentinhaber: Alexander Binzel Schweisstechnik GmbH & Co. KG, 35418 Buseck (DE)
(72) Erfinder: KESSLER, Udo, 35463 Fernwald (DE); ROSE, Sascha, 35463 Fernwald (DE); BENDER, Matthias, 35394 Gießen (DE); HELLMIG, Ralf, 35606 Solms (DE)
(74) Vertreter: Weckenbrock, Matthias
(86) Internationale Anmeldenummer: PCT/EP2020/052659
(87) Internationale Veröffentlichungsnummer: WO 2020/164949

(56) Entgegenhaltungen:
- DE-A1-102015 003 083
- US-A1- 2007 241 161

## Beschreibung

Die Erfindung betrifft eine Drahtvorschubeinrichtung nach dem Oberbegriff des Anspruchs 1 sowie ein Verfahren zum Erzeugen eines Drahtvorschubs nach dem Oberbegriff des Anspruchs 6.

Die Erfindung betrifft insbesondere Drahtvorschubeinrichtungen bzw. Verfahren zum Betreiben derartiger Drahtvorschubeinrichtungen, die in thermischen Fügevorrichtungen mit abschmelzender Drahtelektrode oder mit in Drahtform zugeführtem Zusatzwerkstoff eingesetzt werden. Dies können beispielsweise Schweiß- oder Lötbrenner für das Metallschutzgasschweißverfahren (MSG), insbesondere MIG- bzw. MAG-Verfahren sein. Dabei steht MIG für das sogenannte Metall-Inertgas-Verfahren. MAG steht für das sogenannte Metall-Aktivgas-Verfahren. Die vorliegende Erfindung kann auch Kaltdraht und Heißdrahtantriebe für WIGund Plasmaschweißvorrichtungen, Laser- sowie Hybridverfahren, z. B. MSG-Laser-Hybrid- oder Tandemverfahren betreffen, bei denen Zusatzwerkstoffe in Drahtform separat der Fügestellen zugeführt werden.

Neben einem möglichen Einsatz im Bereich manuell geführter Schweißbrenner betrifft der Gegenstand der Erfindung insbesondere Drahtvorschubeinrichtungen, die in maschinengeführten Brennern eingesetzt werden. Maschinengeführte Brenner sind Brenner, die nicht von einem Menschen, also mit der Hand, sondern von einer Maschine, beispielsweise von einem Mehrachsroboter geführt werden.

In einer gattungsgemäßen Drahtvorschubeinrichtung befindet sich wenigstens ein Antriebselement zum reibschlüssigen Aufbringen einer Antriebsbewegung auf eine durch die Drahtvorschubeinrichtung hindurch geführte Drahtelektrode bzw. einen Draht.

Drahtvorschubeinrichtungen unterschiedlicher Art sind aus dem Stand der Technik, beispielsweise aus den Druckschriften FR 2 624 418, DE 20 2005 022 102 U1, US 2,915,171 A, US 2,053,260 A, EP 1 384 547 B1, DE 1 059 644 B oder DD 250 512 A1 bekannt.

Die dort gezeigten Drahtvorschubeinrichtungen werden überwiegend in Schweißmaschinen eingesetzt. Dabei ist jeweils wenigstens ein Antriebselement vorgesehen, welches mit einer Anpresskraft an dem zu fördernden Draht bzw. an der zu fördernden Drahtelektrode anliegt und gleichzeitig eine Vorschubbewegung darauf überträgt. Die Anpresskraft wird gewöhnlich manuell eingestellt. Daher geben viele Hersteller von Drahtvorschubeinrichtungen für bestimmte Drahtwerkstoffe und - durchmesser Empfehlungen für die manuelle Einstellung der Anpresskraft an. In der Regel wird dies werksseitig zusammen mit den Drahtförderrollengeometrien als Aufkleber im Vorschubkoffer vermerkt. Zum Teil kommen manuell einstellbare Federvorrichtungen zum Einsatz, die eine Vorspannung auf den Draht bzw. die Drahtelektrode ausüben. Die Anpresskraft ist dabei von der Deformation der Vorspannfeder abhängig.

Aus der US 2007/0241161 A1 (Basis für den Oberbegriff der Ansprüche 1 und 6) ist eine Drahtfördervorrichtung zum Transport eines Schweißdrahtes mittels einem durch zumindest eine Antriebsrolle und zumindest eine Druckrolle gebildeten Fördermittel von einem Drahtvorrat zu einem Schweißbrenner bekannt. Eine Verstellvorrichtung mit einem auf die zumindest eine Druckrolle wirkenden elastisch oder plastisch verformbaren Druckmittel ist zur Anpassung des Anpressdruckes der Fördermittel auf den Schweißdraht vorgesehen.

Aus der DE 10 2015 003 083 A1 ist eine Schweißvorrichtung mit Drahtvorschubvorrichtung mit einem Zuführbereich zum Zuführen des Schweißdrahtes zur Drahtvorschubeinrichtung und mit einem Abführbereich zum Ausleiten des Schweißdrahtes aus der Drahtvorschubeinrichtung bekannt. Zwischen dem Zuführbereich und dem Abführbereich sind eine Fördereinrichtung zum Fördern des Schweißdrahtes und eine Anpresseinrichtung zum Anpressen des Schweißdrahts an die Fördereinrichtung angeordnet.

Aus der EP 2 640 544 B1 ist ein Verfahren zum Ermitteln eines Sollwertes für den Anpressdruck von Förderrollen einer Vorrichtung zur Förderung eines Schweißdrahtes einer Schweißvorrichtung bekannt. Der Sollwert des Anpressdrucks wird in Abhängigkeit festgelegter Parameter empirisch oder rechnerisch ermittelt und an der Fördervorrichtung eingestellt. Die Daten der festgelegten Parameter werden zusammen mit zusätzlichen Parametern betreffend die Konfiguration der Schweißvorrichtung in einer Datenbank zusammen mit den jeweiligen empirisch ermittelten Sollwerten des Anpressdrucks oder einer Rechenvorschrift zur Berechnung der jeweiligen Sollwerte des Anpressdrucks gespeichert.

Nachteilig an der manuellen Einstellung der Anpresskraft ist es, dass Maschinenbediener trotz der werksseitigen Angabe einer vorgesehenen Anpresskraft häufig die maximal verfügbare Andruckkraft einstellen. Zum einen geschieht dies aus Bequemlichkeit und zum anderen aus Furcht vor möglichem Schlupf zwischen dem Antriebselement und dem Draht bzw. der Drahtelektrode. Denn das Auftreten von Schlupf zwischen dem Antriebselement und dem Draht bzw. der Drahtelektrode ist unter allen Umständen zu vermeiden, da dieser dazu führen würde, dass zu wenig Material der abschmelzenden Drahtelektrode am vorderen Ende des Schweiß- oder Lötbrenners in den Schmelzbereich eintreten würde. Zum Aufbau der Schweiß- bzw. Lötnaht wäre dann nicht ausreichend Material vorhanden, was in einer verminderten Qualität der entsprechenden Schweißnaht resultieren würde. Gerade bei maschinengeführten Fügevorgängen ist ein solcher Qualitätsmakel unter allen Umständen zu vermeiden.

Ein weiterer Grund besteht darin, dass Antriebe, insbesondere in komplexen Anlagen, nur schwer zugänglich sind. Aus diesem Grund ist eine kontinuierliche Kontrolle sowie ein regelmäßiges manuelles Einstellen der Anpresskraft nicht oder nur sehr beschwerlich möglich.

Mit einer bedienerseitig häufig erfolgenden Einstellung der Anpresskraft auf den maximalen Wert gehen unterschiedliche kurz- bzw. langfristige Nachteile einher. So steigt zum einen der in der Drahtvorschubeinrichtung auftretende, mechanische Verschleiß bei überhöhten Anpresskräften an. Überhöhte Vorspannkräfte können außerdem dazu führen, dass der zu fördernde Draht über seinen Elastizitätsbereich hinweg mit einer Kraft beaufschlagt wird und beim Durchlaufen der Drahtvorschubeinrichtung in unzulässiger Weise plastisch verformt wird. So kann ein ursprünglich kreisförmiger Querschnitt eines Drahtes durch eine überhöhte Anpresskraft beispielsweise in einen elliptischen oder eckigen Querschnitt umgeformt werden, was zu Problemen bei der Förderung oder beim elektrischen Kontaktieren bei Schweiß-oder Lötbrennern bzw. zu erhöhtem Verschleiß und somit zu einer verminderten Qualität der Fügeverbindung infolge von Prozessunregelmäßigkeiten führen kann. Schließlich erhöhen unnötig hohe Anpresskräfte den Energieverbrauch der Drahtvorschubeinrichtung und reduzieren dessen Lebensdauer.

Ausgehend von den zuvor beschriebenen Nachteilen liegt der Erfindung die Aufgabe zugrunde eine verbesserte Drahtvorschubeinrichtung sowie ein Verfahren zum Erzeugen eines Drahtvorschubs anzugeben, mittels welchen Bedienungsfehler vermindert und eine hohe Qualität von thermischen Fügeverbindungen erreicht werden kann.

Die sich daraus ergebende weitere Aufgabe der vorliegenden Erfindung besteht in erster Linie darin, Verschleiß im Antriebssystem zu minimieren, dabei möglichst die erzielbare Nahtqualität zu erhöhen bzw. den Prozess stabil zu halten und nach Möglichkeit den Energieverbrauch der Drahtvorschubeinrichtung zu reduzieren.

Diese Aufgabe wird gelöst mit einer Drahtvorschubeinrichtung nach Anspruch 1 sowie mit einem Verfahren nach Anspruch 6.

### Darstellung der Erfindung

Die Erfindung weist eine Drahtvorschubeinrichtung zum Fördern eines Drahtes auf, insbesondere für eine thermische Fügevorrichtung, mit wenigstens einem von einem Vorschubantrieb betreibbaren Antriebselement, das zum reibschlüssigen Übertragen einer Antriebsbewegung an einen durch die Drahtvorschubeinrichtung hindurchgeführten Draht unter Ausübung einer Anpresskraft anlegbar ist.

Erfindungsgemäß ist ein mit dem wenigstens einen Antriebselement gekoppelter und von einer Steuereinrichtung anhand der gemessenen Werte der Anpresskraft steuerbarer Aktuator zur variablen Einstellung der auf den Draht wirkenden Anpresskraft vorgesehen. Auf diese Weise kann eine durch den Benutzer verursachte Fehlbedienung ausgeschlossen oder unwahrscheinlicher gemacht werden. Die variable Einstellung bzw. Verstellung der Anpresskraft erfolgt dabei vorzugsweise bei laufendem Vorschubantrieb. Durch eine vorzugsweise elektromotorische Einstellung der Anpresskraft an Drahtvorschüben können auch physisch nur schwer zugängliche, weil insbesondere in komplexen Anlagen integrierte Antriebe optimal eingestellt werden. Hierzu kann das System so vereinfacht werden, dass keine aktive Regelung im Prozess die Kraft variiert, aber die Einstellung mittels Fernbedienung, wie beispielsweise Panel, Bluetooth, WLAN usw., eingestellt wird. Ein weiterer Vorteil besteht darin, dass eine deutlich feinere Einstellung der Anpresskraft möglich ist, was insbesondere bei weichen Lötdrähten Vorteile mit sich bringt.

Nach einer ersten vorteilhaften Ausgestaltung der Erfindung ist zwischen dem Antriebselement und dem Aktuator ein Koppelgetriebe, insbesondere eine Andruckwippe, vorgesehen. Dadurch ist es zum einen möglich, eine durch den Aktuator erzeugte Spannbewegung zur Einstellung der Anpresskraft in geeigneter Weise zu untersetzen, sodass auch ein Aktuator verwendet werden kann, der zwischen seinen Endlagen einen verhältnismäßig großen Hub durchläuft. Gleichzeitig kann durch geeignete Auswahl der Untersetzung eines Koppelgetriebes der Arbeitspunkt des Aktuator so eingestellt werden, dass die durch den Aktuator erzeugte Kraft besonders einfach gesteuert bzw. geregelt werden kann.

In einer weiteren vorteilhaften Ausgestaltung der Erfindung weist das Koppelgetriebe, insbesondere die Andruckwippe, eine Rückstellfeder auf, deren Rückstellkraft der Anpresskraft entgegengesetzt ist. Bei der Verwendung einer Rückstellfeder, deren Rückstellkraft der Aktuator bei der Erzeugung der Anpresskraft erst überwinden muss, kann die Steuerung bzw. Regelung des Aktuator weiter vereinfacht werden.

Gemäß einer weiteren Variante der Erfindung sieht das Koppelgetriebe bzw. die Andruckwippe, einen Betätigungsnocken vor, der vorzugsweise den Abtrieb des Aktuator bildet, und einen mit dem Betätigungsnocken betätigbaren und mit dem Antriebselement gekoppelten Andruckstößel aufweist. Eine solche Ausgestaltung des Koppelgetriebes macht eine mechanisch feste Verbindung zwischen dem Aktuator und dem Antriebselement überflüssig, sodass beispielsweise die Montage, Wartung oder Reparatur der Drahtvorschubeinrichtung auf einfachere Weise erfolgen kann. Zudem lässt sich durch geeignete Ausgestaltung der Nockenform sogar eine über den Hub des Andruckstößels variable Übersetzung realisieren, die die Steuer-bzw. Regelbarkeit des Aktuators noch weiter vereinfachen kann.

Erfindungsgemäß weist der Aktuator eine Messeinrichtung zur Bestimmung einer Aktuatorstellung und/oder einer Aktuatorkraft auf. Durch diese Ausgestaltung wird es möglich, mittels einer einfachen Positionsmessung im Kraftübertragungsstrang, also zwischen Aktuator und Antriebselement, die Anpresskraft abzuschätzen. Es wird somit eine indirekte Kraftmessung der Anpresskraft möglich. Es kann auch eine direkte Bestimmung der Anpresskraft vorgesehen sein, in dem die Aktuatorkraft, also beispielsweise die am Abtrieb des Aktuator anliegende Kraft gemessen wird und damit ein direkter Rückschluss auf die Anpresskraft am Antriebselement möglich wird. Zur Bestimmung der Anpresskraft am Antriebselement muss gegebenenfalls noch eine durch ein Koppelgetriebe hervorgerufene Kraftverstärkung rechnerisch berücksichtigt werden.

Erfindungsgemäß ist wenigstens eine Messeinrichtung zur Bestimmung des Vorschubes des Drahtes und/oder zur Überwachung der Drahtgeometrie vorgesehen. Bei der Ansteuerung des Aktuator mittels der Steuereinrichtung können Messwerte einer Messeinrichtung berücksichtigt werden, sodass stets eine ausreichend hohe Anpresskraft, jedoch möglichst keine zu hohe Anpresskraft auf den Draht wirkt. Die Regelgröße zur Einstellung der Anpresskraft ist demnach der Drahtvorschub. Somit kann ein unerwünschter Schlupf zwischen dem Antriebselement und dem Draht sicher vermieden werden. Gleichzeitig können überhöhte Anpresskräfte und so ein vorzeitiger Verschleiß der Bauteile vermieden werden. Der Vorschub des Drahtes kann zum einen durch eine direkt an dem Draht erfolgende Messung, beispielsweise durch ein den Draht direkt kontaktierendes Messrad erfolgen. Alternativ kann auch der Motorstrom des Antriebs gemessen werden, welcher die Antriebsbewegung erzeugt.

Auf Basis der Drahtgeometrie bzw. einer sogenannten Deformationskontrolle ist eine Plausibilitätskontrolle zur Werkstoffauswahl für die Prozessparameter, wie etwa der Schweißleistung und der Anpresskraft möglich. Weist beispielsweise ein bestimmter Werkstoff bei einem vorgegeben Einstelldruck eine definierte Deformation auf, kann davon ausgegangen werden, dass die Einstellung der werkstoffabhängigen Anpresskraft mit hoher Wahrscheinlichkeit dem entsprechenden Werkstoff entspricht. Vorteil der Deformationserkennung ist das Erkennen einer falschen Werkstoffauswahl vor dem eigentlichen Start des Schweißprozesses im Rahmen des Einfädelns des Drahtes in die Vorrichtung. Zwar kann ein falscher Werkstoff auch über unzulässige Schweißparameter indirekt erkannt werden, allerdings ist in einem solchen Fall u. U. das Bauteil bereits beschädigt. Durch die Deformationskontrolle kann bereits beim Einfädeln ein falscher Werkstoff erkannt werden.

In einer weiteren Variante der Erfindung erfasst die wenigstens eine Messeinrichtung den Vorschub oder die Drahtgeometrie optisch oder mechanisch. Eine optische Erfassung des Vorschubs bzw. der Drahtgeometrie hat einerseits den Vorteil, dass die Messung berührungslos und somit praktisch verschleißfrei stattfinden kann. Eine mechanische Erfassung kann in der Regel kostengünstiger umgesetzt werden und ist unter industriellen Einsatzbedingungen gegebenenfalls resistenter gegenüber den dort auftretenden Verschmutzungen.

Es ist denkbar, Drähte mit verschiedenen Drahtdurchmessern zu fördern. Aus diesem Grund können an den Drahtdurchmesser angepasste Förderrollen vorgesehen sein, so dass dadurch bei verschiedenen Drahtdurchmessern stets in etwa der gleiche Abrollumfang der Förderrollen gewährleistet ist. Diese Anpassung der Förderrollen kann über unterschiedliche Nutenformen umgesetzt werden, welche auf der Oberfläche der Förderrollen angebracht sind. Damit kann trotz unterschiedlicher Drahtdurchmesser von der Drehzahl auf die Drahtmenge geschlossen werden. Auch braucht aufgrund dieser Anpassung der Förderrollen keine Rückkopplung zur Motorsteuerung vorgesehen sein. Auf diese Weise kann die erfindungsgemäße Einstellung der auf den Draht wirkenden Anpresskraft unabhängig vom Drahtantrieb ausgeführt werden.

Gemäß einem eigenständigen Gedanken der Erfindung ist ein Verfahren zum Erzeugen eines Vorschubs an einem durch eine Drahtvorschubeinrichtung hindurchgeführten Draht vorgesehen, insbesondere mit einer Drahtvorschubeinrichtung wie oben beschrieben. Eine mittels eines Vorschubantriebs erzeugte Antriebsbewegung wird von einem mit dem Vorschubantrieb gekoppelten Antriebselement reibschlüssig auf den Draht übertragen und das Antriebselement liegt dabei mit einer Anpresskraft an dem Draht an.

Das erfindungsgemäße Verfahren sieht weiter vor, dass die Anpresskraft mittels eines anhand der gemessenen Werte der Anpresskraft gesteuerten und/oder geregelten Aktuators auf unterschiedliche Werte variabel einstellbar ist.

Die Erfindung gestattet nunmehr, die auf den zu fördernden Draht wirkende Anpresskraft maschinell so einzustellen, dass Schlupf zwischen dem Antriebselement und dem Draht vermieden oder zumindest auf ein zulässiges Maß verringert werden kann. Zudem ist es möglich, durch die maschinelle Einstellung, zu hohe Anpresskraft zu vermeiden und so den Verschleiß der gesamten Vorrichtung zu verringern bzw. die für eine hohe Schweißgüte geforderte Drahtgeometrie zu gewährleisten. Das Verfahren kann vorzugsweise mit einer Drahtvorschubeinrichtung durchgeführt werden. Die Anpresskraft kann mittels eines gesteuerten und/oder geregelten Aktuators auf unterschiedliche Werte einstellbar sein.

Gemäß einer ersten vorteilhaften Weiterbildung des Verfahrens wird die Anpresskraft in Abhängigkeit wenigstens eines Drahtförderparameters, vorzugsweise des Schlupfes zwischen dem Antriebselement und dem zu fördernden Draht und/oder des vorgegebenen Vorschubs und/oder der gemessenen Drahtgeometrie und/oder eines Schweißparameters, insbesondere des Schweißstromes, gesteuert oder geregelt. Eine Fehlbedienung durch den Benutzer kann auf diese Weise nahezu ausgeschlossen werden. Zum Einrichten der Drahtvorschubeinrichtung wird somit die manuelle Einstellung bzw. nachträgliche Anpassung der Anpresskraft überflüssig. Es wird auf diese Weise nur diejenige Anpresskraft eingestellt, die für einen ordnungsgemäßen Schweißablauf durch Sicherstellung des gewünschten Vorschubes erforderlich ist.

Erfindungsgemäß wird die Anpresskraft bei Inbetriebsetzung der Drahtvorschubeinrichtung auf einen Startwert eingestellt und bei Auftreten von Schlupf zwischen dem Antriebselement und dem Draht auf einen oberhalb einer Schlupfgrenze liegenden Wert erhöht. Auf diese Weise kann mit großer Wahrscheinlichkeit gewährleistet werden, dass nicht nur der aktuell auftretende Schlupf beseitigt wird, sondern auch gegebenenfalls neu auftretender Schlupf durch ansteigende mechanische Widerstände bei der Förderung des Drahtes vermieden wird oder deutlich geringer ausfällt. Es wird sozusagen ein "Sicherheitsabstand" zu der Schlupfgrenze, also zu dem Wert der Anpresskraft eingehalten, bei welchem unter den aktuellen Gegebenheiten gerade kein Schlupf mehr auftritt.

Erfindungsgemäß entspricht der Startwert der Anpresskraft dem zuletzt eingestellten Wert der Anpresskraft und die Anpresskraft wird bei Ausbleiben von Schlupf zwischen dem Antriebselement und dem Draht im laufenden Betrieb der Drahtvorschubeinrichtung reduziert und bei erneutem Auftreten von Schlupf wieder auf einen oberhalb der Schlupfgrenze liegenden Wert erhöht. Mit dieser Ergänzung des der Steuerung oder der Regelung zugrunde liegenden Algorithmus ist es möglich, die auf den Draht wirkende Anpresskraft während des laufenden Betriebes der Drahtvorschubeinrichtung auf das zur Gewährleistung eines ordnungsgemäßen Schweißvorganges erforderliche Maß zu reduzieren.

In einer weiteren Variante wird die Anpresskraft schrittweise auf diskrete Werte eingestellt. Dies ermöglicht eine einfache Ansteuerung des Aktuators. Alternativ kann die Anpresskraft stufenlos oder quasi stufenlos auf unterschiedliche Werte eingestellt werden. Eine stufenlose oder quasi stufenlose Einstellung der Werte der Anpresskraft erlaubt eine besonders feine Steuerung oder Regelung. Unter "quasi stufenlos" ist zu verstehen, dass eine Steuereinrichtung, die den Aktuator ansteuert, an ihrem Ausgang mit ihrer größtmöglichen Auflösung betrieben wird. Demgegenüber ist unter einer schrittweisen, auf diskrete Werte gerichteten Einstellung der Anpresskraft zu verstehen, dass in dem Wertebereich für die Ansteuerung des Aktuators lediglich einige wenige feste Werte für die Anpresskraft voreingestellt sind und die Anpresskraft jeweils auf einen dieser festen Werte einstellbar ist.

In einer weiteren vorteilhaften Ausgestaltung der Erfindung wird die Anpresskraft in Abhängigkeit eines an der Drahtvorschubeinrichtung oder an einer mit der Drahtvorschubeinrichtung verbundenen Schweißeinheit gemessenen Parameters geregelt. Ein Eingriff des Benutzers zur Einstellung oder Anpassung der korrekten Anpresskraft kann auf diese Weise vollständig wegfallen. Somit kann zum einen der in der Vorrichtung auftretende, mechanische Verschleiß weiter verringert und die Qualität der Schweißverbindung noch weiter verbessert werden.

Beispielsweise ist eine Hüllkurvenüberwachung denkbar, wobei, insbesondere im Neuzustand der Drahtvorschubeinrichtung eine einmalige Referenzkurve am Bauteil abgefahren und dabei ein Kraft-Zeit- oder Kraft-Weg-Verlauf aufgezeichnet wird. Dieser könnte dann als Referenzkurve zur Voreinstellung der Kraft dienen und auch als Basiswert für das sogenannte "Condition Monitoring".

Gemäß einer weiteren vorteilhaften Ausgestaltung der Erfindung ist ein der Regelung zugrunde liegender Algorithmus nach dem Prinzip eines P-Reglers, PI-Reglers, PID-Reglers, I-Reglers oder PD-Reglers vorgesehen. Bei einer solchen Regelung wird zunächst eine Regeldifferenz aus der Abweichung des gemessenen Parameters von einem Parameter-Vorgabewert ermittelt. Dies kann beispielsweise der Schlupf sein. Der Parameter-Vorgabewert für den Schlupf stets null oder nahezu null. Die Stärke der Anhebung oder Reduktion der Anpresskraft erfolgt dann in Abhängigkeit der Stärke der Regeldifferenz und/oder der Änderungsgeschwindigkeit der Regeldifferenz. Zum einen ist hierdurch eine genauere, aber auch eine schnellere Regelung möglich. Gerade, wenn der Schlupf zwischen dem Antriebselement und dem Draht als Führungsgröße für die Regelung, also als ausschlaggebender Parameter, verwendet wird, ist eine besonders schnelle aus Regelung der Vorspannkraft gewünscht.

Nach einer weiteren vorteilhaften Ausgestaltung der Erfindung ist vorgesehen, dass Werte, auf die die Anpresskraft eingesteuert oder eingeregelt wird, zwischengespeichert und zur Feststellung eines Systemzustands ausgewertet werden. Diese Variante betrifft das "Condition Monitoring". Dabei soll über die Überwachung der Anpresskraft indirekt eine Information über den Zustand des Drahtfördersystems gewonnen werden. Das bedeutet, dass bei Überschreiten einer bestimmten Kraft davon ausgegangen werden kann, dass Systemkomponenten verschlissen oder verdreckt sind - was Reinigung oder Austausch erforderlich macht, jedoch einem vollständigen Ausfall während des laufenden Betriebes vorbeugt.

Zur Überwachung können diskrete Werte oder auch Hüllkurven (siehe oben) verwendet werden. Zusätzlich kann auch überwacht werden, wie lange bestimmte Werte überschritten werden. Ziel ist es, dass der Anwender frühzeitig reagieren und vorbeugende Instandhaltungsmaßnahmen für das Drahtfördersystem einleiten kann.

Die Hüllkurve zur Anpresskraft soll der Systemüberwachung dienen, wobei vornehmlich automatisierte Anwendungen mit sich zyklisch wiederholenden Aufgaben betrachtet werden. Beispielsweise könnte ein Roboter permanent identische Bahnkurven in der gleichen Zeit abfahren. Eine Hüllkurve könnte daher zum einen die Kraft über dem Weg darstellen, was ggf. aber eine zusätzliche Synchronisation mit der Robotersteuerung erfordert, oder aber nur über die relative Zeit. Weitere Zuordnungen wären durch zyklusabhängige Parameter wie beispielsweise die Drahtfördergeschwindigkeit, die Stromstärken oder die Laserleistungen möglich. Durch eine oder mehrere solcher Parameter kann die Abweichung zwischen dem aktuellen Wert und einem Sollwert aus dem Idealprozess abgeleitet werden. Dieser ist in der Regel präziser als ein einfacher Schwellwert.

Eine weitere Ausgestaltung des erfindungsgemäßen Verfahrens sieht vor, dass die Kraftverläufe gespeichert und mittels Hüllkurvenüberwachung mit Referenzkurven abgeglichen werden können.

Schließlich kann auch vorgesehen sein, dass eingestellte Kräfte, Deformationen und Motorstromdaten des Aktuators erfasst, gespeichert und analog mittels Kabel oder digital mittels Kabelverbindung oder digital kabellos übertragen werden können. Mögliche technische Verfahren sind insbesondere Laser-Messsystem, die beispielsweise in Ziehbetrieben für die Online- und Echtzeit-Kontrolle von Durchmesser und Ovalität von Drähten eingesetzt werden. Diese werden auch als Lasermikrometer bezeichnet.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Dabei zeigen zum Teil schematisch:
- Figur 1: eine perspektivische Ansicht einer Drahtvorschubeinrichtung mit einer mechanischen Messeinrichtung,
- Figur 2: eine perspektivische Ansicht der Drahtvorschubeinrichtung mit einer optischen Messeinrichtung,
- Figur 3: eine Draufsicht auf einen Ausschnitt der Drahtvorschubeinrichtung mit Aktuator und Andruckwippe gemäß Fig. 1 oder 2,
- Figur 4: eine perspektivische Ansicht des Ausschnitts gemäß Fig. 3,
- Figur 5: eine weitere perspektivische Ansicht des Ausschnitts gemäß Fig. 3,
- Figur 6: eine Detailansicht der Andruckwippe,
- Figur 7: eine perspektivische Darstellung der Detailansicht gemäß Fig. 6,
- Figur 8: eine schematische Darstellung der Antriebsbewegung eines Drahtes,
- Figur 9: eine perspektivische Ansicht einer Drahtvorschubeinrichtung mit einem Antriebsriemen,
- Figur 10: eine perspektivische Ansicht mit Ausschnitt einer Drahtvorschubeinrichtung mit einem Antriebsriemen,
- Figur 11: eine perspektivische Detailansicht einer Drahtvorschubeinrichtung mit direkt betätigtem Andruckstößel und
- Figur 12: ein Ablaufdiagramm zur Bestimmung der Anpresskraft.

Gleiche oder gleichwirkende Bauteile werden in den nachfolgend dargestellten Figuren der Zeichnung anhand einer Ausführungsform mit Bezugszeichen versehen, um die Lesbarkeit zu verbessern.

Der Gegenstand der Erfindung betrifft Drahtvorschubeinrichtungen 11, insbesondere solche, die neben einem möglichen Einsatz im Bereich manuell geführter Schweißbrenner auch in maschinengeführten Brennern eingesetzt werden. In der im vorliegenden Ausführungsbeispiel beschriebenen Drahtvorschubeinrichtung 11 befindet sich wenigstens ein Antriebselement 1, 4 zum reibschlüssigen Aufbringen einer Antriebsbewegung auf eine durch die Drahtvorschubeinrichtung 11 hindurch geführte Drahtelektrode bzw. einen Draht 13.

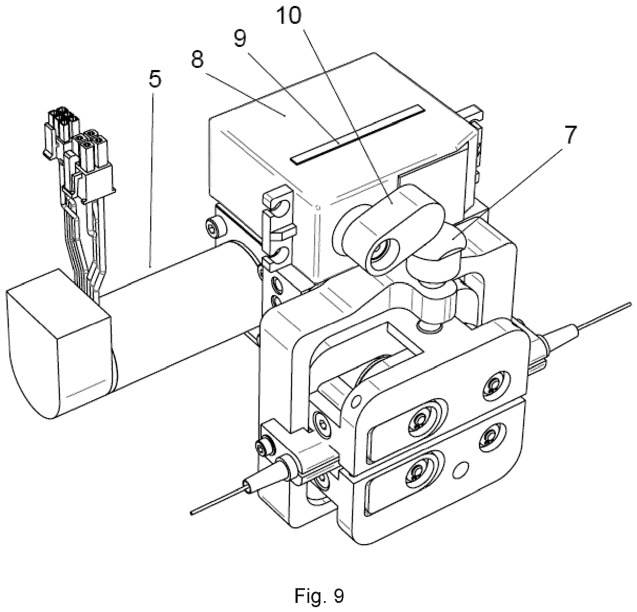

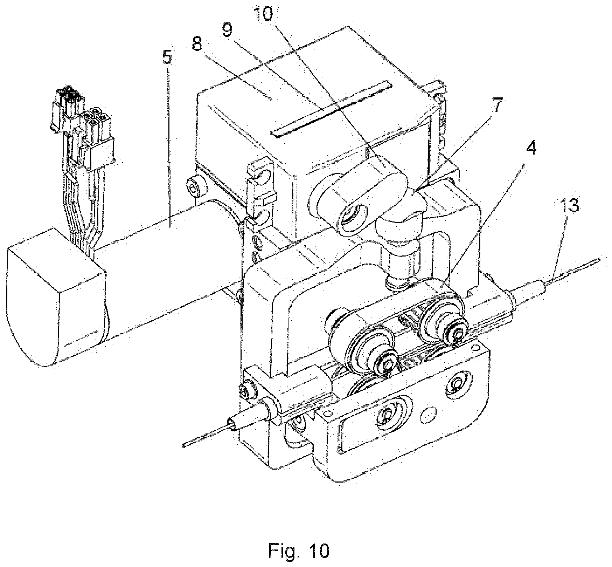

Vorliegend ist das Antriebselement 1 als Antriebsrolle ausgestaltet, im Sinne der Erfindung ist es auch denkbar, eine sogenannte Antriebsraupe oder einen Antriebsriemen 4 als Antriebselement einzusetzen. Eine Drahtvorschubeinrichtung 11 mit dem als Antriebsriemen 4 ausgebildeten Antriebselement geht aus der Fig. 9 und der Fig. 10 hervor.

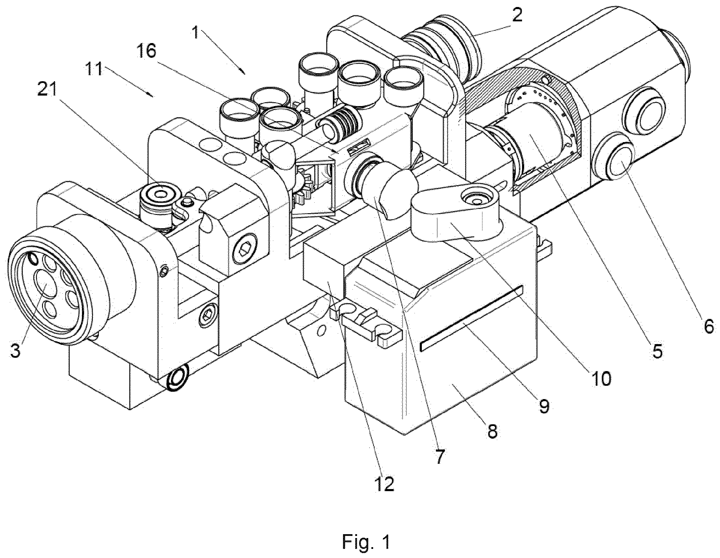

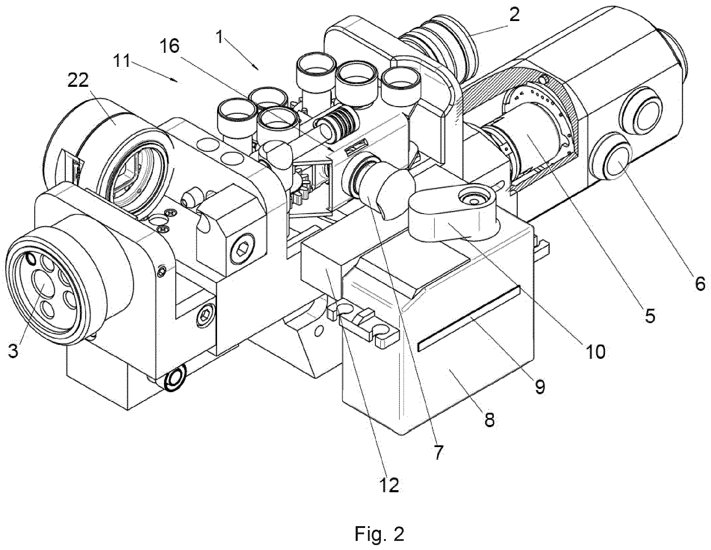

Fig. 1 und Fig. 2 verdeutlichen die Drahtvorschubeinrichtung 11 zum Fördern des Drahtes 13, insbesondere für eine thermische Fügevorrichtung.

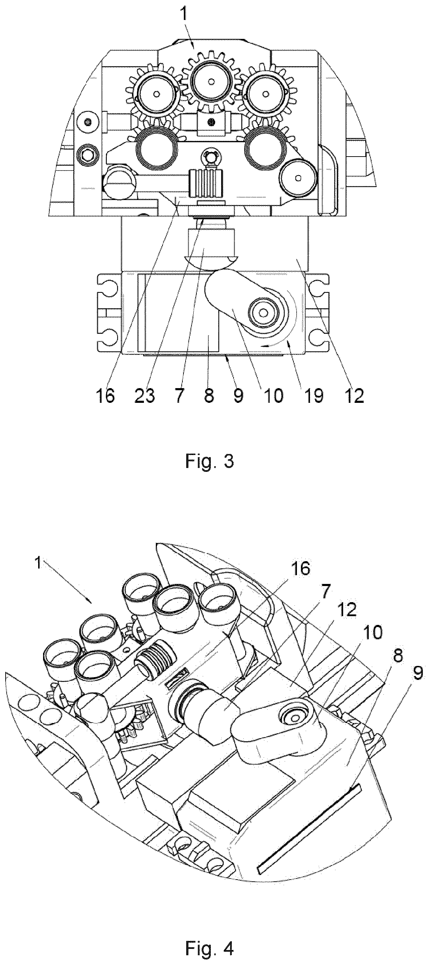

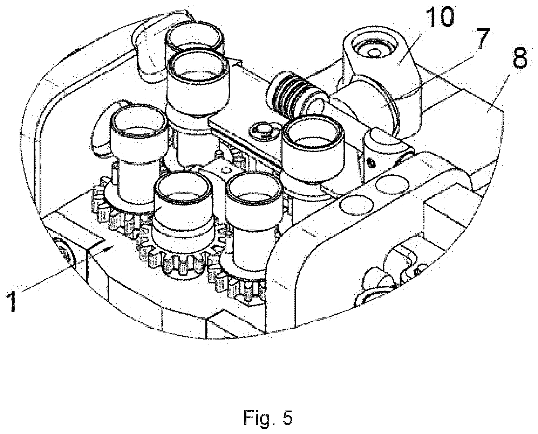

Wie aus Fig. 1 und Fig. 2 sowie insbesondere aus den Detailansichten der Drahtvorschubeinrichtung 11 gemäß Fig. 3 bis 5 hervorgeht, weist die Drahtvorschubeinrichtung 11 eine Schnittstelle 2 für ein Schlauchpaket zur Draht-, Strom und/oder Schutzgasversorgung auf. Der Draht 13 wird durch einen Zentralanschluss 3 in die Drahtvorschubeinrichtung 11 eingeführt.

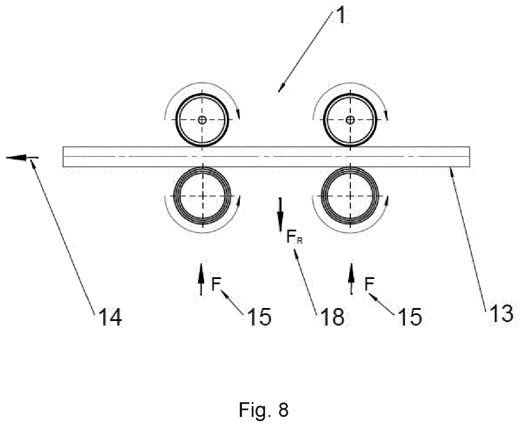

Die Drahtvorschubeinrichtung 11 weist vorliegend wenigstens ein von einem Vorschubantrieb 5 betreibbares Antriebselement 1 auf, das zum reibschlüssigen Übertragen einer Antriebsbewegung 14 an den durch die Drahtvorschubeinrichtung 11 hindurchgeführten Draht 13 unter Ausübung einer Anpresskraft 15 anlegbar ist, wie Fig. 8 verdeutlicht.

Im vorliegenden Ausführungsbeispiel kann der Vorschubantrieb 5 mittels einer Drahtvorschubtaste 6 betätigt werden, wie in Fig. 1 bis 5 zu sehen ist.

Für die Verwendung von Drähten mit verschiedenen Drahtdurchmessern können an den Drahtdurchmesser angepasste Förderrollen vorgesehen sein, so dass dadurch bei verschiedenen Drahtdurchmessern stets in etwa der gleiche Abrollumfang der Förderrollen gewährleistet ist. Diese Anpassung der Förderrollen kann über unterschiedliche Nutenformen umgesetzt werden, welche auf der Oberfläche der Förderrollen angebracht sind. Damit kann trotz unterschiedlicher Drahtdurchmesser von der Drehzahl auf die Drahtmenge geschlossen werden. Auch braucht aufgrund dieser Anpassung der Förderrollen keine Rückkopplung zur Motorsteuerung vorgesehen sein. Auf diese Weise kann die erfindungsgemäße Einstellung der auf den Draht wirkenden Anpresskraft unabhängig vom Drahtantrieb ausgeführt werden.

Aus Fig. 1 und Fig. 2 sowie Fig. 9 und Fig. 10 geht ferner ein mit dem wenigstens einen Antriebselement 1 gekoppelter und von einer Steuereinrichtung 12 anhand der gemessenen Werte der Anpresskraft 15 steuerbarer Aktuator 8 zur variablen Einstellung der auf den Draht 13 wirkenden Anpresskraft 15 hervor. Vorliegend treibt der Aktuator 8 einen Betätigungsnocken 10 an, welcher auf eine als Andruckwippe 16 ausgebildete Kraftmesseinrichtung 7 einwirkt. Die Andruckwippe 16 kann ein Rückstellelement, insbesondere eine Rückstellfeder 17 aufweisen, so dass sie aufgrund der Rückstellkraft nach Betätigung wieder in ihre Ausgangslage zurück gelangt.

Eine Anzeige 9, insbesondere eine Einheit aus LED, kann zur Anzeige der Anpresskraft 15, ggf. auch für das manuelle Nachstellen der Anpresskraft 15 vorgesehen sein.

Die variable Einstellung bzw. Verstellung der Anpresskraft 15 erfolgt dabei vorzugsweise bei laufendem Vorschubantrieb 5. Durch eine vorzugsweise elektromotorische Einstellung der Anpresskraft 15 an Drahtvorschüben können auch physisch nur schwer zugängliche, weil insbesondere in komplexen Anlagen integrierte Antriebe optimal eingestellt werden. Hierzu kann das System so vereinfacht werden, dass keine aktive Regelung im Prozess die Kraft variiert, aber die Einstellung beispielsweise über ein Panel oder Bluetooth bzw. WLAN oder Dergleichen eingestellt wird.

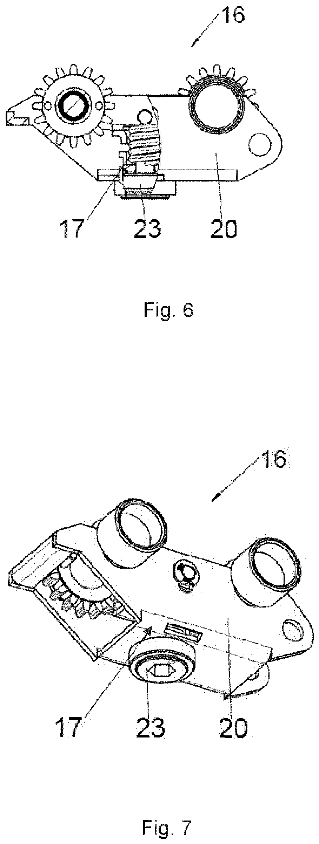

Fig. 6 und Fig. 7 zeigen, dass die in einem Gehäuse 20 angeordnete Andruckwippe 16 zwischen dem Antriebselement 1 und dem Aktuator 8 als Koppelgetriebe mit Andruckstößel 23 und Rückstellfeder 17 ausgebildet ist, deren Rückstellkraft 18 der Anpresskraft 15 entgegengesetzt ist. Hierdurch ist es möglich, eine durch den Aktuator 8 erzeugte Spannbewegung zur Einstellung der Anpresskraft 15 in geeigneter Weise zu untersetzen, sodass auch ein Aktuator 8 verwendet werden kann, der zwischen seinen Endlagen einen verhältnismäßig großen Hub durchläuft. Gleichzeitig kann durch geeignete Auswahl der Untersetzung des Koppelgetriebes der Arbeitspunkt des Aktuator 8 so eingestellt werden, dass die durch den Aktuator 8 erzeugte Kraft besonders einfach gesteuert bzw. geregelt werden kann.

Fig. 1 und Fig. 2 zeigen jeweils eine Messeinrichtung 21, 22 zur Bestimmung einer Aktuatorstellung 19, wobei aus Fig. 1 wenigstens eine mechanische 21 und aus Fig. 2 wenigstens eine optische Messeinrichtung 22 zur Bestimmung des Vorschubes des Drahtes 13 und/oder zur Überwachung der Drahtgeometrie hervorgeht. Die mechanische Messeinrichtung 21 oder die optische Messeinrichtung 22 erfasst den Vorschub oder die Drahtgeometrie optisch bzw. mechanisch.

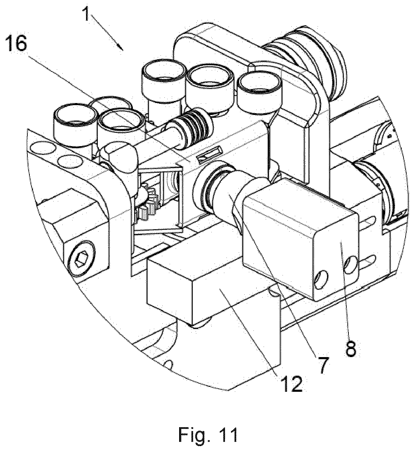

Aus Fig. 11 geht in einer perspektivischen Detailansicht der Drahtvorschubeinreichung 11 statt dem Betätigungsnocken 10 eine pneumatische oder hydraulische Anpresskraftregulierung hervor. Bei der Ausführungsform gemäß Fig. 11 handelt es sich um einen direkten Antrieb, wobei der Andruckstößel 23 direkt betätigt wird, beispielsweise mit einem pneumatischen oder hydraulischen Antrieb. Die übrigen Figuren zeigen einen indirekten Antrieb.

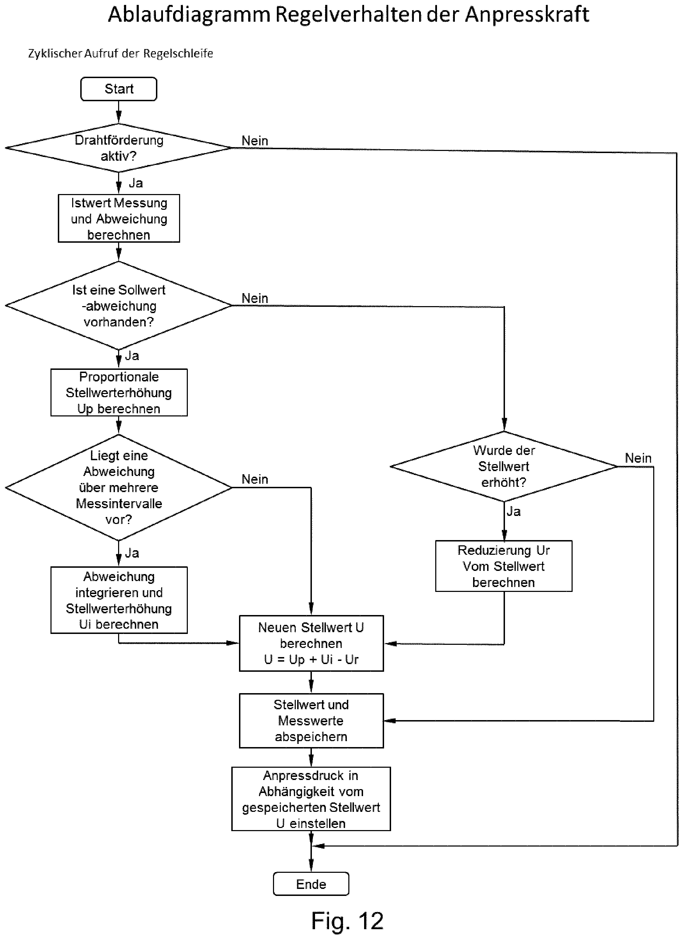

Nachfolgend wird das erfindungsgemäße Verfahren zum Erzeugen eines Vorschubs an einem durch die Drahtvorschubeinrichtung 11 hindurchgeführten Drahtes 13, insbesondere mit einer oben beschriebenen Drahtvorschubeinrichtung 11, anhand einem Ablaufdiagramm gemäß Fig. 12 näher erläutert.

Mittels des Vorschubantriebs 5 wird eine Antriebsbewegung 14 von einem mit dem Vorschubantrieb 5 gekoppelten Antriebselement 1 reibschlüssig auf den Draht 13 übertragen. Das Antriebselement 1 liegt dabei mit einer Anpressraft 15 an dem Draht 13 an. Die Anpresskraft 15 ist mittels eines anhand der gemessenen Werte der Anpresskraft 15 gesteuerten und/oder geregelten Aktuators 8 auf unterschiedliche Werte variabel einstellbar.

Der Aktuator 8 kann grundsätzlich auf einem elektromotorischen, pneumatischen oder hydraulischen Wirkprinzip oder aber auch auf einer Kombination davon beruhen, so dass die Anpresskraft in den vorliegenden Ausführungsformen elektromotorisch, pneumatisch oder hydraulisch ausgebildet sein kann.

Die Anpresskraft 15 wird in Abhängigkeit wenigstens eines Drahtförderparameters, vorzugsweise des Schlupfes zwischen dem Antriebselement 1 und dem zu fördernden Draht 13 und/oder des vorgegebenen Vorschubs und/oder der gemessenen Drahtgeometrie und/oder eines Schweißparameters, insbesondere des Schweißstromes, gesteuert oder geregelt.

Zunächst wird dabei die Anpresskraft 15 bei Inbetriebsetzung der Drahtvorschubeinrichtung 11 auf einen Startwert eingestellt und bei Auftreten von Schlupf zwischen dem Antriebselement 1 und dem Draht 13 auf einen oberhalb einer Schlupfgrenze liegenden Wert erhöht.

Der Startwert der Anpresskraft 15 entspricht dem zuletzt eingestellten Wert der Anpresskraft 15. Die Anpresskraft 15 wird bei Ausbleiben von Schlupf zwischen dem Antriebselement 1 und dem Draht 13 im laufenden Betrieb der Drahtvorschubeinrichtung 11 reduziert und bei erneutem Auftreten von Schlupf wieder auf einen oberhalb der Schlupfgrenze liegenden Wert erhöht.

Dieses Einstellen der Anpresskraft 15 kann entweder schrittweise auf diskrete Werte erfolgen oder stufenlos oder quasi stufenlos auf unterschiedliche Werte.

Im vorliegenden Ausführungsbeispiel wird die Anpresskraft 15 in Abhängigkeit eines an der Drahtvorschubeinrichtung 11 oder an einer mit der Drahtvorschubeinrichtung 11 verbundenen Schweißeinheit gemessenen Parameters geregelt.

Ein der Regelung zugrunde liegender Algorithmus ist nach dem Prinzip eines P-Reglers, PI-Reglers, PID-Reglers, I-Reglers oder PD-Reglers vorgesehen.

Insbesondere ist bei dem vorliegenden Ausführungsbeispiel vorgesehen, dass während einer sogenannten Einlernphase die minimale Anpresskraft 15 für das Drahtfördersystem vor der ersten Drahtförderung ermittelt wird. Dazu wird innerhalb einer Einlernfahrt, vorzugsweise beim Einfädeln eines neuen Drahtes 13 oder nach einer Wartung die Anpresskraft 15 schrittweise erhöht bis kein Schlupf mehr vorhanden ist. Dieser Wert für die ermittelte minimale Anpresskraft 15 wird abgespeichert, da sie als minimal Anpresskraft 15 bei allen folgenden Drahtförderungen bis zum erneuten Einlernen nicht mehr unterschritten wird.

Nach der Einlernphase arbeitet die Drahtschubeinrichtung im Normalbetrieb. Für den Fall, dass im Normalbetrieb Schlupf, d. h. eine nicht zulässige Abweichung, vorliegt, wird die Anpresskraft 15 proportional zur Abweichung und der vorausgehenden Anpresskraft erhöht. Erfolgt eine Abweichung über mehrere Messpunkte, werden diese Abweichungen aufsummiert und die Anpresskraft 15 in Abhängigkeit davon zusätzlich angehoben. Die Anpresskraft 15 wird damit schnell bzw. "aggressiv" angehoben, wobei eine kurzzeitige Überschreitung der unbedingt notwendigen Anpresskraft 15 über den erforderlichen Wert hinaus in Kauf genommen werden kann. Daher ist eine anschließende Reduzierung der Anpresskraft 15 erforderlich und vorgesehen.

Wird nach der Erhöhung der Anpresskraft 15 keine neuerliche Abweichung mehr gemessen, erfolgt eine Reduzierung der Anpresskraft 15, die proportional zur vorherigen Erhöhung ist. Das Zeitintervall für die Messung ist zeitlich konstant oder an die Drahtfördergeschwindigkeit angepasst, was einer konstanten Drahtfördermenge entspricht.

Nach jedem Drahtförderzyklus ohne eine messbare Abweichung wird die Anpresskraft 15 zusätzlich reduziert. Die Reduzierung erfolgt dabei schrittweise über mehrere Drahtförderzyklen, wobei die minimale Anpresskraft 15 aus der oben beschriebenen Einlernphase bekannt ist.

Die Werte, auf die die Anpresskraft 15 eingesteuert oder eingeregelt wird, können zwischengespeichert und zur Feststellung eines Systemzustands ausgewertet werden.

Auch ist es im Sinne der Erfindung denkbar, dass die Kraftverläufe gespeichert und mittels Hüllkurvenüberwachung mit Referenzkurven abgeglichen werden.

Im Sinne der Erfindung kann ebenfalls vorgesehen sein, dass im Moment der geometrischen Umorientierung eines Lichtbogenschweißbrenners oder eine Laseroptik die Leistung, beispielsweise die Stromstärke oder die Laserleistung in jedem Zyklus an einer definierten Bahnposition verändert wird. Dies erhöht den Widerstand für den Drahtvorschub, was zu einer erhöhten Anpresskraft 15 führt, aber einem normalen Prozessverhalten zuzuordnen ist. Wird beispielsweise ein einfacher Schwellwert für den gesamten Zyklusverlauf verwendet, dann muss dieser Schwellwert als Maximalwert auf der gesamten Bahnkurve berücksichtigt werden, sodass Drahtförderprobleme an anderen Stellen der Bahnkurve möglicherweise unerkannt bleiben. Wird dieser bahnabhängige Schwellwert aber nur im Bereich der Umorientierung berücksichtigt, dann kann die Anpresskraft 15 mit dem konkreten bahnabhängigen Sollwert verglichen werden.

Im Sinne der Erfindung ist es ebenfalls denkbar, dass der Draht 13 mäanderförmig über den Antriebsriemen 4 gemäß Fig. 9 und 10 geführt wird. Diese Drahtbewegung kann an den Antrieb 8 mechanisch angekoppelt sein. Denkbar ist aber auch ein separater Antrieb des Drahtes für die mäanderförmige Bewegung. Auf diese Weise wird der Riemen 4 über nahezu seine gesamte Oberfläche gleichmäßig abgenutzt, so dass dadurch die Haltbarkeit des Riemens deutlich verlängert wird. Die Riemenbreite kann vorzugsweise bei etwa 20 mm liegen.

### Bezugszeichenliste

- 1: Antriebselement (Antriebsrolle)
- 2: Schnittstelle
- 3: Zentralanschluss
- 4: Antriebselement (Antriebsriemen)
- 5: Vorschubantrieb
- 6: Drahtvorschubtaste
- 7: Kraftmesseinrichtung
- 8: Aktuator
- 9: Anzeige
- 10: Betätigungsnocken
- 11: Drahtvorschubeinrichtung
- 12: Steuereinrichtung
- 13: Draht
- 14: Antriebsbewegung
- 15: Anpresskraft
- 16: Andruckwippe
- 17: Rückstellfeder
- 18: Rückstellkraft
- 19: Aktuatorstellung
- 20: Gehäuse Andruckwippe
- 21: mechanische Messeinrichtung
- 22: optische Messeinrichtung
- 23: Andruckstößel

## Patentansprüche

1. Drahtvorschubeinrichtung (11) zum Fördern eines Drahtes (13) für eine thermische Fügevorrichtung mit wenigstens einem von einem Vorschubantrieb (5) betreibbaren Antriebselement (1), das zum reibschlüssigen Übertragen einer Antriebsbewegung (14) an einen durch die Drahtvorschubeinrichtung (11) hindurchgeführten Draht (13) unter Ausübung einer Anpresskraft (15) anlegbar ist, wobei ein mit dem wenigstens einen Antriebselement (1) gekoppelter und von einer Steuereinrichtung (12) steuerbarer Aktuator (8) zur variablen Einstellung der auf den Draht (13) wirkenden Anpresskraft (15) vorgesehen ist, wobei die Anpresskraft (15) in Abhängigkeit wenigstens eines Drahtförderparameters, vorzugsweise des Schlupfes zwischen dem Antriebselement (1) und dem zu fördernden Draht (13) und/oder des vorgegebenen Vorschubs und/oder der gemessenen Drahtgeometrie und/oder eines Schweißparameters, insbesondere des Schweißstromes, steuerbar oder regelbar ist, **dadurch gekennzeichnet, dass** der Aktuator (8) eine Messeinrichtung (21, 22) zur Bestimmung einer Aktuatorstellung (19) und/oder einer Aktuatorkraft aufweist, wobei die Messeinrichtung (21, 22) konfiguriert ist, die Anpresskraft (15) indirekt abzuschätzen oder direkt zu bestimmen,
und/oder wenigstens eine Messeinrichtung (21, 22) zur Bestimmung des Vorschubes des Drahtes (13) und/oder zur Überwachung der Drahtgeometrie vorgesehen ist,
wobei die Anpresskraft (15) mittels des anhand der gemessenen Messwerte der Messeinrichtung (21, 22) gesteuerten und/oder geregelten Aktuators (8) auf unterschiedliche Werte variabel einstellbar ist.

2. Drahtvorschubeinrichtung (11) nach Anspruch 1, **dadurch gekennzeichnet, dass** zwischen dem Antriebselement (1) und dem Aktuator (8) eine Andruckwippe(16) vorgesehen ist.

3. Drahtvorschubeinrichtung (11) nach Anspruch 2, **dadurch gekennzeichnet, dass** die Andruckwippe (16) eine Rückstellfeder (17) aufweist, deren Rückstellkraft (18) der Anpresskraft (15) entgegengesetzt ist.

4. Drahtvorschubeinrichtung (11) nach Anspruch 3, **dadurch gekennzeichnet, dass** die Andruckwippe (16) einen Betätigungsnocken (10) aufweist, der vorzugsweise den Abtrieb des Aktuators (8) bildet, und einen mit dem Betätigungsnocken (10) betätigbaren und mit dem Antriebselement (1) gekoppelten Andruckstößel (23) aufweist.

5. Drahtvorschubeinrichtung (11) nach Anspruch 1, **dadurch gekennzeichnet, dass** die wenigstens eine Messeinrichtung (21, 22) den Vorschub oder die Drahtgeometrie optisch (21) oder mechanisch (22) erfasst.

6. Verfahren zum Erzeugen eines Vorschubs an einem durch eine Drahtvorschubeinrichtung (11) hindurchgeführten Draht (13)mit einer Drahtvorschubeinrichtung (11) nach einem der vorherigen Ansprüche, wobei eine mittels eines Vorschubantriebs (5) erzeugte Antriebsbewegung (14) von einem mit dem Vorschubantrieb (5) gekoppelten Antriebselement (1, 4) reibschlüssig auf den Draht (13) übertragen wird und das Antriebselement (1, 4) dabei mit einer Anpresskraft (15) an dem Draht (13) anliegt, wobei die Anpresskraft (15) mittels eines anhand der gemessenen Werte der Anpresskraft (15) gesteuerten und/oder geregelten Aktuators (8) auf unterschiedliche Werte variabel einstellbar ist, wobei die Anpresskraft (15) in Abhängigkeit wenigstens eines Drahtförderparameters, vorzugsweise des Schlupfes zwischen dem Antriebselement (1) und dem zu fördernden Draht (13) und/oder des vorgegebenen Vorschubs und/oder der gemessenen Drahtgeometrie und/oder eines Schweißparameters, insbesondere des Schweißstromes, gesteuert oder geregelt wird, wobei die Anpresskraft (15) mittels des anhand der mit der Messeinrichtung (21, 22) gemessenen Messwerte gesteuerten und/oder geregelten Aktuators (8) auf unterschiedliche Werte variabel eingestellt wird, wobei die Anpresskraft (15) bei Inbetriebsetzung der Drahtvorschubeinrichtung (11) auf einen Startwert eingestellt und bei Auftreten von Schlupf zwischen dem Antriebselement (1) und dem Draht (13) auf einen oberhalb einer Schlupfgrenze liegenden Wert erhöht wird und der Startwert der Anpresskraft (15) dem zuletzt eingestellten Wert der Anpresskraft (15) entspricht und die Anpresskraft (15) bei Ausbleiben von Schlupf zwischen dem Antriebselement (1) und dem Draht (13) im laufenden Betrieb der Drahtvorschubeinrichtung (11) reduziert und bei erneutem Auftreten von Schlupf wieder auf einen oberhalb der Schlupfgrenze liegenden Wert erhöht wird.

7. Verfahren nach Anspruch 6, **dadurch gekennzeichnet, dass** die Anpresskraft (15) in Abhängigkeit wenigstens eines Drahtförderparameters, vorzugsweise des Schlupfes zwischen dem Antriebselement (1) und dem zu fördernden Draht (13) und/oder des vorgegebenen Vorschubs und/oder der gemessenen Drahtgeometrie und/oder eines Schweißparameters, insbesondere des Schweißstromes, gesteuert oder geregelt wird.

8. Verfahren nach einem der Ansprüche 6 oder 7, **dadurch gekennzeichnet, dass** die Anpresskraft (15) schrittweise auf diskrete Werte eingestellt wird.

9. Verfahren nach einem der Ansprüche 6 bis 8, **dadurch gekennzeichnet, dass** die Anpresskraft (15) stufenlos oder quasi stufenlos auf unterschiedliche Werte eingestellt wird.

10. Verfahren nach einem der Ansprüche 6 bis 9, **dadurch gekennzeichnet, dass** die Anpresskraft (15) in Abhängigkeit eines an der Drahtvorschubeinrichtung (11) oder an einer mit der Drahtvorschubeinrichtung (11) verbundenen Schweißeinheit gemessenen Parameters geregelt wird.

11. Verfahren nach Anspruch 10, **dadurch gekennzeichnet, dass** ein der Regelung zugrunde liegender Algorithmus nach dem Prinzip eines P-Reglers, PI-Reglers, PID-Reglers, I-Reglers oder PD-Reglers vorgesehen ist.

12. Verfahren nach einem der Ansprüche 6 bis 11, **dadurch gekennzeichnet, dass** Werte, auf die die Anpresskraft (15) eingesteuert oder eingeregelt wird, zwischengespeichert und zur Feststellung eines Systemzustands ausgewertet werden.

13. Verfahren nach einem der Ansprüche 6 bis 12, **dadurch gekennzeichnet, dass** die Kraftverläufe gespeichert und mittels Hüllkurvenüberwachung mit Referenzkurven abgeglichen werden können.

## Claims

1. Wire-feed device (11) for conveying a wire (13) for a thermal joining apparatus, having at least one drive element (1) which is able to be operated by a feed drive (5) and, while exerting a contact pressure force (15) for transmitting by frictional engagement a driving movement (14), is able to be brought to bear on a wire (13) routed through the wire-feed device (11); wherein an actuator (8) which is coupled to the at least one drive element (1) and is controllable by a control apparatus (12) is provided for variably adjusting the contact pressure force (15) acting on the wire (13); wherein the contact pressure force (15) is able to be controlled or feedback-controlled as a function of at least one wire-conveying parameter, preferably the slippage between the drive element (1) and the wire (13) to be conveyed, and/or the defined feed and/or the measured wire geometry and/or a welding parameter, in particular the welding current, **characterized in that** the actuator (8) has a measuring device (21, 22) for determining an actuator position (19) and/or an actuator force, wherein the measuring device (21, 22) is configured to estimate indirectly or determine directly the contact pressure force (15), and/or at least one measuring device (21, 22) for determining the feed of the wire (13) and/or for monitoring the wire geometry is provided, wherein the contact pressure force (15) is variably adjustable to different values by means of the actuator (8) controlled and/or feedback-controlled by way of the measured values of the measuring device (21, 22).

2. Wire-feed device (11) according to Claim 1, **characterized in that** a pressure rocker (16) is provided between the drive element (1) and the actuator (8).

3. Wire-feed device (11) according to Claim 2, **characterized in that** the pressure rocker (16) has a restoring spring (17), the restoring force (18) of the latter being counter to the contact pressure force (15).

4. Wire-feed device (11) according to Claim 3, **characterized in that** the pressure rocker (16) has an activation cam (10) which preferably forms the output of the actuator (8) and has a pressure tappet (23) which is activatable by the activation cam (10) and is coupled to the drive element (1).

5. Wire-feed device (11) according to Claim 1, **characterized in that** the at least one measuring device (21, 22) detects the feed or the wire geometry optically (21) or mechanically (22).

6. Method for generating a feed on a wire (13) routed through a wire-feed device (11), using a wire-feed device (11) according to one of the preceding claims, wherein a driving movement (14) generated by means of a feed drive (5) is transmitted by frictional engagement to the wire (13) by a drive element (1, 4), which is coupled to the feed drive (5), and the drive element (1, 4) herein bears on the wire (13) by way of a contact pressure force (15); wherein the contact pressure force (15) is variably adjustable to different values by means of an actuator (8) controlled and/or feedback-controlled by way of the measured values of the contact pressure force (15); wherein the contact pressure force (15) is controlled or feedback-controlled as a function of at least one wire-conveying parameter, preferably the slippage between the drive element (1) and the wire (13) to be conveyed, and/or the defined feed and/or the measured wire geometry and/or a welding parameter, in particular the welding current; wherein the contact pressure force (15) is variably adjusted to different values by means of the actuator (8) controlled and/or feedback-controlled by way of the measured values measured by way of the measuring device (21, 22); wherein the contact pressure force (15) when starting up the wire-feed device (11) is set to an initial value and, in the event of slippage occurring between the drive element (1) and the wire (13), is increased to a value above a slippage limit, and the initial value of the contact pressure force (15) corresponds to the last adjusted value of the contact pressure force (15), and the contact pressure force (15) in the absence of slippage between the drive element (1) and the wire (13) is reduced in the ongoing operation of the wire-feed device (11) and, in the event of a re-occurrence of slippage, is increased again to a value above the slippage limit.

7. Method according to Claim 6, **characterized in that** the contact pressure force (15) is controlled or feedback-controlled as a function of at least one wire-conveying parameter, preferably the slippage between the drive element (1) and the wire (13) to be conveyed, and/or the defined feed and/or the measured wire geometry and/or a welding parameter, in particular the welding current.

8. Method according to one of Claims 6 or 7, **characterized in that** the contact pressure force (15) is adjusted to discrete values in steps.

9. Method according to one of Claims 6 to 8, **characterized in that** the contact pressure force (15) is set to different values in a stepless or quasi stepless manner.

10. Method according to one of Claims 6 to 9, **characterized in that** the contact pressure force (15) is feedback-controlled as a function of a parameter measured at the wire-feed device (11) or at a welding unit connected to the wire-feed device (11).

11. Method according to Claim 10, **characterized in that** an algorithm on which the feedback control is based is provided according to the principle of a P feedback controller, PI feedback controller, I feedback controller, or PD feedback controller.

12. Method according to one of Claims 6 to 11, **characterized in that** values to which the contact pressure force is actuated or feedback-controlled are temporarily stored and evaluated for establishing a system state.

13. Method according to one of Claims 6 to 12, **characterized in that** the force profiles are stored and reconciled by means of intrinsic curve monitoring with reference curves.

## Revendications

1. Dispositif d'avance de fil métallique (11) servant au transport d'un fil métallique (13) pour un dispositif d'assemblage thermique comportant au moins un élément d'entraînement (1) pouvant être actionné par un entraînement d'avance (5), lequel élément d'entraînement, pour transmettre par friction un mouvement d'entraînement (14), pouvant être appliqué contre un fil métallique (13) guidé à travers le dispositif d'avance de fil métallique (11) en exerçant une force de pression (15), un actionneur (8) accouplé à l'au moins un élément d'entraînement (1) et pouvant être commandé par un dispositif de commande (12) étant prévu pour le réglage variable de la force de pression (15) agissant sur le fil métallique (13), la force de pression (15) pouvant être commandée ou pouvant être réglée en fonction d'au moins un paramètre de transport de fil métallique, de préférence du glissement entre l'élément d'entraînement (1) et le fil métallique (13) à transporter et/ou de l'avance prédéfinie et/ou de la géométrie mesurée du fil métallique et/ou d'un paramètre de soudage, en particulier du courant de soudage, **caractérisé en ce que** l'actionneur (8) présente un dispositif de mesure (21, 22) servant à la détermination d'une position d'actionneur (19) et/ou d'une force d'actionneur, le dispositif de mesure (21, 22) étant configuré pour évaluer indirectement ou pour déterminer directement la force de pression (15), et/ou au moins un dispositif de mesure (21, 22) servant à la détermination de l'avance du fil métallique (13) et/ou servant à la surveillance de la géométrie du fil métallique étant prévu, la force de pression (15) étant réglable de manière variable à différentes valeurs au moyen de l'actionneur (8) commandé et/ou réglé sur la base des valeurs de mesure mesurées du dispositif de mesure (21, 22).

2. Dispositif d'avance de fil métallique (11) selon la revendication 1, **caractérisé en ce qu'**une bascule à pression (16) est prévue entre l'élément d'entraînement (1) et l'actionneur (8).

3. Dispositif d'avance de fil métallique (11) selon la revendication 2, **caractérisé en ce que** la bascule à pression (16) présente un ressort de rappel (17) dont la force de rappel (18) est opposée à la force de pression (15).

4. Dispositif d'avance de fil métallique (11) selon la revendication 3, **caractérisé en ce que** la bascule à pression (16) présente une came d'actionnement (10) qui forme de préférence la sortie de l'actionneur (8), et présente un poussoir de pression (23) pouvant être actionné à l'aide de la came d'actionnement (10) et accouplé à l'élément d'entraînement (1).

5. Dispositif d'avance de fil métallique (11) selon la revendication 1, **caractérisé en ce que** l'au moins un dispositif de mesure (21, 22) détecte l'avance ou la géométrie du fil métallique de manière optique (21) ou mécanique (22).

6. Procédé permettant de produire une avance d'un fil métallique (13) guidé à travers un dispositif d'avance de fil métallique (11) à l'aide d'un dispositif d'avance de fil métallique (11) selon l'une des revendications précédentes, un mouvement d'entraînement (14) produit au moyen d'un entraînement d'avance (5) étant transmis par friction au fil métallique (13) par un élément d'entraînement (1, 4) accouplé à l'entraînement d'avance (5) et l'élément d'entraînement (1, 4) s'appuyant en l'occurrence par une force de pression (15) contre le fil métallique (13), la force de pression (15) étant réglable de manière variable à différentes valeurs au moyen d'un actionneur (8) commandé et/ou réglé sur la base des valeurs mesurées de la force de pression (15), la force de pression (15) étant commandée ou réglée en fonction d'au moins un paramètre de transport de fil métallique, de préférence du glissement entre l'élément d'entraînement (1) et le fil métallique (13) à transporter et/ou de l'avance prédéfinie et/ou de la géométrie mesurée du fil métallique et/ou d'un paramètre de soudage, en particulier du courant de soudage, la force de pression (15) étant réglée de manière variable à différentes valeurs au moyen de l'actionneur (8) commandé et/ou réglé sur la base des valeurs de mesure mesurées à l'aide du dispositif de mesure (21, 22), la force de pression (15), lors de la mise en marche du dispositif d'avance de fil métallique (11), étant réglée à une valeur initiale et, en cas d'apparition d'un glissement entre l'élément d'entraînement (1) et le fil métallique (13), étant augmentée à une valeur située au-dessus d'une limite de glissement et la valeur initiale de la force de pression (15) correspondant à la valeur réglée le plus récemment de la force de pression (15) et la force de pression (15) étant réduite en cas d'absence de glissement entre l'élément d'entraînement (1) et le fil métallique (13) au cours du fonctionnement du dispositif d'avance de fil métallique (11) et étant à nouveau augmentée à une valeur située au-dessus de la limite de glissement en cas de nouvelle apparition de glissement.

7. Procédé selon la revendication 6, **caractérisé en ce que** la force de pression (15) est commandée ou réglée en fonction d'au moins un paramètre de transport de fil métallique, de préférence du glissement entre l'élément d'entraînement (1) et le fil métallique (13) à transporter et/ou de l'avance prédéfinie et/ou de la géométrie mesurée du fil métallique et/ou d'un paramètre de soudage, en particulier du courant de soudage.

8. Procédé selon l'une des revendications 6 ou 7, **caractérisé en ce que** la force de pression (15) est réglée progressivement à des valeurs discrètes.

9. Procédé selon l'une des revendications 6 à 8, **caractérisé en ce que** la force de pression (15) est réglée à différentes valeurs de manière continue ou quasiment continue.

10. Procédé selon l'une des revendications 6 à 9, **caractérisé en ce que** la force de pression (15) est réglée en fonction d'un paramètre mesuré au niveau du dispositif d'avance de fil métallique (11) ou au niveau d'une unité de soudage reliée au dispositif d'avance de fil métallique (11).

11. Procédé selon la revendication 10, **caractérisé en ce qu'**un algorithme sur lequel la régulation est basée est prévu selon le principe d'un régulateur proportionnel (P), d'un régulateur proportionnel-par intégration (PI), d'un régulateur proportionnel-par intégration-par différenciation (PID), d'un régulateur par intégration (I) ou d'un régulateur proportionnel-par différenciation (PD).

12. Procédé selon l'une des revendications 6 à 11, **caractérisé en ce que** les valeurs auxquelles la force de pression (15) est commandée ou réglée sont stockées temporairement et évaluées pour la détermination d'un état de système.

13. Procédé selon l'une des revendications 6 à 12, **caractérisé en ce que** les courbes de force sont stockées et peuvent être comparées à des courbes de référence par surveillance d'enveloppe.
